# EUROPEAN PATENT APPLICATION

(11) **EP 4 852 302 A1**
(43) Date of publication of application: **09.12.2026**
(21) Application number: 26175848.6
(22) Date of filing: 30.04.2026
(51) Int. Cl.: H02M 7/5395, H02M 1/00, H02M 1/14, H02M 1/15, H02M 1/36, H02M 1/42, H02P 1/46, H02P 27/08, H02P 27/10

(54) **CRITICAL POWER IDENTIFICATION FOR POWER FACTOR CORRECTION CIRCUITS IN MULTI-PHASE MOTOR DRIVES**

(30) Priority: 05.06.2025 US 202519228864
(71) Applicant: ABB Schweiz AG, 5400 Baden (CH)
(72) Inventor: CHEN, Weiqiang, 27606 Raleigh (US); TREMELLING, Darren, 27606 Raleigh (US); AGORO, Sodiq, 27606 Raleigh (US); PATEL, Vidhi, 27606 Raleigh (US)
(74) Representative: Zimmermann & Partner Patentanwälte mbB

(57) **Abstract**

A motor drive for a multi-phase motor is provided. The motor drive includes a controller configured to: (a) operate a PFC circuit in a discontinuous mode to maintain a voltage of a DC link, (b) operate a multi-phase inverter to inject a DC current into the multi-phase motor to align the rotor, (c) determine whether the PFC circuit transitions from the discontinuous mode to a continuous mode while injecting the DC current, (d) operate the multi-phase inverter to increase the DC current in response to determining that the PFC circuit has not transitioned, (e) identify a value of the DC current in response to determining that the PFC circuit has transitioned, and (f) identify a critical power for the multi-phase motor based on the value, where the critical power defines a power of the multi-phase motor where the PFC circuit transitions while the rotor is rotating.

## Description

### BACKGROUND

The field of the disclosure relates to motor drives, and in particular, to motor drives for multi-phase motors that utilize power factor correction (PFC) circuits.

PFC circuits are often used in motor drives to improve the power factor of the motor drive. A power factor is a measure of how efficiently electrical power is used in an alternating current (AC) circuit. A power factor is a ratio of the real power used by the AC circuit to the apparent power used by the AC circuit, where the real power is the power used to do real work by the AC circuit and the apparent power is the total power supplied to the AC circuit to do the work. Ideally the power factor of an AC circuit is one, with a power factor of less than one indicating that the AC circuit is less efficient at utilizing the power supplied by the source to the AC circuit to do the work.

During operation of the motor drive, the PFC circuit of the motor drive converts AC voltage from an AC source to a direct current (DC) voltage for a DC link of the motor drive. The DC link is used to power multi-phase inverters that drive a multi-phase motor. When the multi-phase motor does not consume sufficient energy, then the DC link voltage may rise as the PFC circuit continues to charge capacitors of the DC link and create an over-voltage condition on the DC link. To control the energy transferred to the DC link by the PFC circuit, a pulse width modulation (PWM) pattern associated with power switches of the PFC circuit that charges the DC link may be temporarily disabled and then re-enabled to maintain the DC link voltage within acceptable limits. Temporarily disabling and re-enabling the PWM pattern may be referred to as a burst mode of operation for the PFC circuit or a discontinuous mode of operation for the PFC circuit. During the discontinuous mode, when the multi-phase motor does not consume sufficient energy, the DC link voltage may rise while the PWM pattern is enabled for the PFC circuit, and fall while the PWM pattern is disabled for the PFC circuit. Thus, enabling and disabling the PWM pattern for the PFC circuit operates to maintain the DC link voltage within the acceptable limits. However, the power factor of the motor drive when the PFC circuit operates in the discontinuous mode may be poor.

When the multi-phase motor does consume sufficient energy, then the PWM pattern may be provided continuously, which may be referred to as a normal mode of operation of the PFC circuit or a continuous mode of operation of the PFC circuit. In the continuous mode, the DC link voltage is regulated by varying the duty cycle of the PWM pattern applied to the power switches of the PFC circuit that charge the DC link. Generally, the power factor of the motor drive when the PFC circuit operates in the continuous mode is higher than when the PFC circuit operates in the discontinuous mode, and therefore, it is desirable to transition out of the discontinuous mode as soon as possible.

Because the motor drive has a higher power factor while the PFC circuit is operating in the continuous mode, it is desirable to identify the transition point where the PFC circuit can operate in the continuous mode. However, the transition point may be difficult to detect or determine, as the transition point may vary depending on a number of factors, such as the AC input voltage to the PFC circuit, the model of the multi-phase motor, the load coupled to the multi-phase motor, etc.

Thus, it is desirable to more accurately identify the transition point where the PFC circuit transitions to the continuous mode in order to improve the performance and power factor of the motor drive.

### BRIEF DESCRIPTION

In one embodiment, a motor drive for a multi-phase motor is provided. The motor drive includes a controller configured to: (a) operate a PFC circuit configured to couple to an AC line input in a discontinuous mode to maintain a voltage of a DC link between an upper voltage threshold and a lower voltage threshold, (b) operate a multi-phase inverter coupled to the DC link, while a rotor of the multi-phase motor is nonrotating, to inject a DC current into the multi-phase motor to align the rotor, and (c) determine whether the PFC circuit transitions from the discontinuous mode to a continuous mode while injecting the DC current. The controller is further configured to: (d) operate the multi-phase inverter to increase the DC current in response to determining that the PFC circuit has not transitioned from the discontinuous mode to the continuous mode, (e) identify a value of the DC current in response to determining that the PFC circuit has transitioned from the discontinuous mode to the continuous mode, and (f) identify a critical power for the multi-phase motor based on the value, where the critical power defines a power of the multi-phase motor where the PFC circuit transitions from the discontinuous mode to the continuous mode while the rotor is rotating.

In another embodiment, a method operable by a controller of a motor drive for a multi-phase motor is provided. The method comprises: (a) operating a PFC circuit configured to couple to an AC line input in a discontinuous mode to maintain a voltage of a DC link between an upper voltage threshold and a lower voltage threshold, (b) operating a multi-phase inverter coupled to the DC link, while a rotor of the multi-phase motor is nonrotating, to inject a DC current into the multi-phase motor to align the rotor, and (c) determining whether the PFC circuit transitions from the discontinuous mode to a continuous mode while injecting the DC current. The method further comprises: (d) operating the multi-phase inverter to increase a value of the DC current in response to determining that the PFC circuit has not transitioned from the discontinuous mode to the continuous mode, (e) identifying the value of the DC current in response to determining that the PFC circuit has transitioned from the discontinuous mode to the continuous mode, and (f) identifying a critical power for the multi-phase motor based on the value, where the critical power defines a power of the multi-phase motor where the PFC circuit transitions from the discontinuous mode to the continuous mode while the rotor is rotating.

In another embodiment, a motor drive for a multi-phase motor is provided. The motor drive includes a PFC circuit coupled between an AC line input and a DC link, where the PFC circuit is configured to operate in a discontinuous mode and a continuous mode, a multi-phase inverter coupled to the DC link and the multi-phase motor, and a controller. The controller is configured to: (a) operate the PFC circuit in the discontinuous mode to regulate a voltage of the DC link while a rotor of the multi-phase motor is nonrotating, (b) operate the multi-phase inverter to incrementally increase a value of a DC current injected into the multi-phase motor while the rotor of the multi-phase motor is nonrotating, and (c) determine whether the PFC circuit transitions from the discontinuous mode to the continuous mode while incrementally increasing the value of the DC current. The controller is further configured to: (d) identify a critical power for the multi-phase motor based on the value of the DC current when the PFC circuit transitions from the discontinuous mode to the continuous mode, and (e) modify one or more parameters of the PFC circuit based on the critical power when the rotor is rotating.

### BRIEF DESCRIPTION OF DRAWINGS

These and other features, aspects, and advantages of the present disclosure will become better understood when the following detailed description is read with reference to the accompanying drawings in which like characters represent like parts throughout the drawings.
FIG. 1 depicts a known current graph illustrating a fixed DC current that is typically injected into a multi-phase motor during a rotor alignment process.
FIG. 2 depicts a block diagram of a motor drive for a multi-phase motor in an exemplary embodiment
FIG. 3 illustrates a voltage graph of a voltage of a DC link over time that varies based on whether a PFC circuit operates in the discontinuous mode or the continuous mode in an exemplary embodiment.
FIG. 4 illustrates a current graph of a DC current injected into multi-phase motor during a rotor alignment process of the multi-phase motor in an exemplary embodiment.
FIG. 5 depicts a method operable by a controller of a motor drive for a multi-phase motor in an exemplary embodiment.
FIGS. 6-8 illustrate optional embodiments of the method of FIG. 5 in exemplary embodiments.

Unless otherwise indicated, the drawings provided herein are meant to illustrate features of embodiments of this disclosure. These features are believed to be applicable in a wide variety of systems comprising one or more embodiments of this disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

As used herein, the terms "processor" and "computer," and related terms, e.g., "processing device," "computing device," and "controller" are not limited to just those integrated circuits referred to in the art as a computer, but broadly refers to a microcontroller, a microcomputer, an analog computer, a programmable logic controller (PLC), an application specific integrated circuit (ASIC), and other programmable circuits, and these terms are used interchangeably herein. In the embodiments described herein, "memory" may include, but is not limited to, a computer-readable medium, such as a random-access memory (RAM), a computer-readable non-volatile medium, such as a flash memory. Alternatively, a floppy disk, a compact disc - read only memory (CD-ROM), a magneto-optical disk (MOD), and/or a digital versatile disc (DVD) may also be used. Also, in the embodiments described herein, additional input channels may be, but are not limited to, computer peripherals associated with an operator interface such as a touchscreen, a mouse, and a keyboard. Alternatively, other computer peripherals may also be used that may include, for example, but not be limited to, a scanner. Furthermore, in the example embodiment, additional output channels may include, but not be limited to, an operator interface monitor or heads-up display. Some embodiments involve the use of one or more electronic or computing devices. Such devices typically include a processor, processing device, or controller, such as a general purpose central processing unit (CPU), a graphics processing unit (GPU), a microcontroller, a reduced instruction set computer (RISC) processor, an ASIC, a programmable logic controller (PLC), a field programmable gate array (FPGA), a digital signal processing (DSP) device, and/or any other circuit or processing device capable of executing the functions described herein. The methods described herein may be encoded as executable instructions embodied in a computer readable medium, including, without limitation, a storage device and/or a memory device. Such instructions, when executed by a processing device, cause the processing device to perform at least a portion of the methods described herein. The above examples are not intended to limit in any way the definition and/or meaning of the term processor and processing device.

As discussed briefly above, it may be desirable to more accurately identify the point where the PFC circuit transitions from the discontinuous to continuous mode in order to improve the performance of the motor drive. In some cases, the parameters of the PFC circuit are modified depending on whether the PFC circuit is operating in the discontinuous or continuous mode. For example, when the PFC circuit transitions out of the discontinuous and into the continuous mode, the voltage control strategy for the DC link may change. Modifying the voltage control strategy may include removing upper and lower voltage limits on the DC link when the PFC circuit transitions out of the discontinuous mode and into the continuous mode.

In another example, when the PFC circuit transitions out of the discontinuous mode and into the continuous mode, the inductor current control loop saturation value of the PFC circuit may change. The inductor current control loop saturation value controls the peak current limit for the output inductor of the PFC circuit. Generally, the current control loop saturation value is lower when the PFC circuit operates in the discontinuous mode as compared to when the PFC circuit operates in the continuous mode, in order to ensure the voltage stability of the DC link. The current control loop saturation value may be higher when the PFC circuit operates in the continuous mode as compared to when the PFC circuit operates in the discontinuous mode, in order to improve the transient response of the PFC circuit. Other modifications to the control strategies for the motor drive may change depending on whether the PFC circuit is operating in the discontinuous or continuous mode, and therefore, identifying the transition point is desirable.

This transition point may be referred to as the critical power for the multi-phase motor such that when the multi-phase motor consumes less than the critical power, the PFC circuit operates in the discontinuous mode, and when the multi-phase motor consumes more than the critical power, then the PFC circuit operates in the continuous mode. The critical power may be considered the minimum power that the multi-phase motor operates at where the PFC circuit is able to operate in the continuous mode.

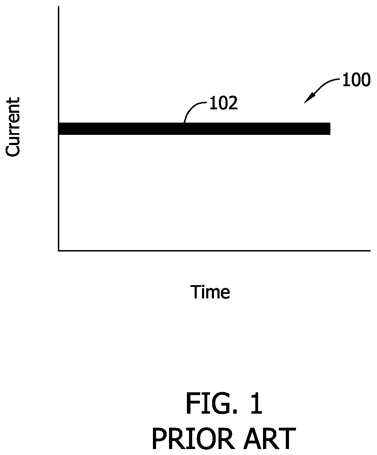

In the embodiments described herein, the critical power for the multi-phase motor is identified during a rotor alignment process for the multi-phase motor. Rotor alignment refers to a process that aligns the rotor with the stator's magnetic field to ensure proper operation of the multi-phase motor. Rotor alignment involves centering the rotor axially in order to prevent wear on the thrust bearings, as well as ensuring that the rotor's electrical position aligns with the stator's magnetic field. Typically, the rotor alignment process involves injecting a fixed DC current into the multi-phase motor while the rotor is not rotating as illustrated in FIG. 1. FIG. 1 depicts a known current graph 100 illustrating a fixed DC current 102 that is typically injected into a multi-phase motor during a rotor alignment process. Typically, fixed DC current 102 is continuously applied while the rotor is not rotating until the rotor is aligned.

In the embodiments described herein, the critical power for the multi-phase motor is determined during a rotor alignment process by injecting a DC current that increases over time. When the multi-phase motor is initially not rotating, the load on the DC link is low and the PFC circuit is initially operated in the discontinuous mode. As the DC current injected into the multi-phase motor increases, the PFC circuit eventually transitions from the discontinuous mode to the continuous mode at the critical power, and the critical power can be determined based on the value of the DC current injected into the multi-phase motor when the PFC circuit transitions.

The critical power may then be used while operating the multi-phase motor in order to modify the parameters of the PFC circuit and improve the performance of the motor drive. Further, identifying the critical power for the PFC circuit may enable the PFC circuit to transition out of the discontinuous mode and into the continuous mode faster during operation of the multi-phase motor, which improves the power factor of the motor drive.

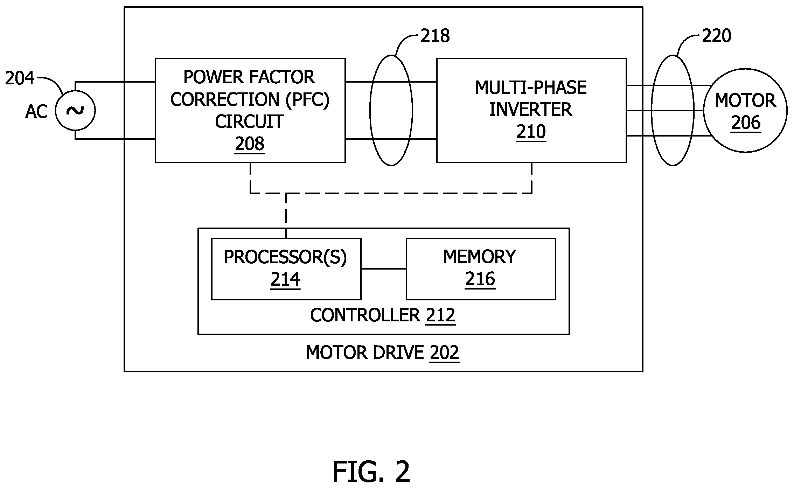

FIG. 2 depicts a block diagram of a motor drive 202 for a multi-phase motor in an exemplary embodiment. Motor drive 202 comprises any component, system, or device which performs the functions described herein for motor drive 202. Motor drive 202 will be described with respect to various discrete elements, which perform functions. These elements may be combined in different embodiments or segmented into different discrete elements in other embodiments. Further, motor drive 202 may include other elements not shown or described.

In this embodiment, motor drive 202 is coupled to an AC source 204 and a multi-phase motor 206. In this embodiment, AC source 204 is a single-phase source, but AC source 204 may be a three-phase source in other embodiments. In this embodiment, motor drive 202 further includes a PFC circuit 208, a multi-phase inverter 210, and a controller 212. Controller 212 in this embodiment includes at least one processor 214 communicatively coupled to a memory 216. Controller 212, utilizing processor 214 and memory 216, may implement the functionality described herein for motor drive 202 and control the operations of PFC circuit 208 and multi-phase inverter 210 in order to operate multi-phase motor 206. For example, memory 216 may store parameters that processor 214 utilizes to modify the operation of PFC circuit 208 and/or multi-phase inverter 210. In another example, memory 216 may store programmed instructions which, when executed by processor 214, implements the functionality described herein for controller 212.

In this embodiment, PFC circuit 208 converts AC voltage provided by AC source 204 to a DC voltage and charges capacitors of a DC link 218. Multi-phase inverter 210 is coupled between DC link 218 and multi-phase motor 206, and multi-phase inverter 210 converts the DC voltage at DC link 218 to AC waveforms, which are provided to a multi-phase input 220 of multi-phase motor 206 in order to control the rotation of a rotor (not shown) of multi-phase motor 206.

Similar to that described previously for PFC circuits, PFC circuit 208 may operate in the discontinuous mode when multi-phase motor 206 operates below the critical power and operate in the continuous mode when multi-phase motor 206 operates above the critical power.

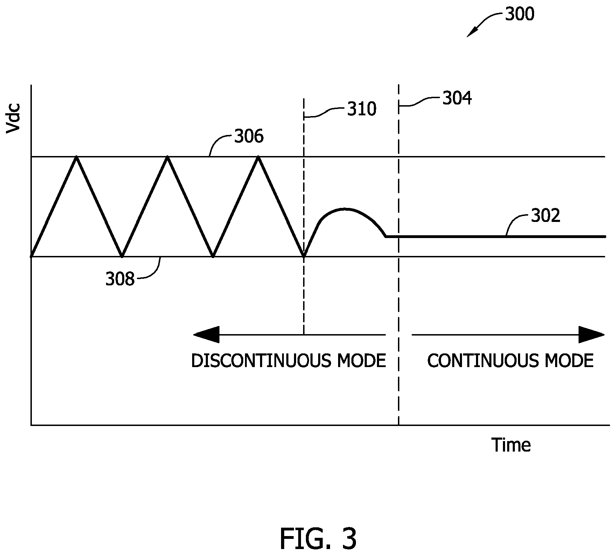

FIG. 3 illustrates a voltage graph 300 of a voltage 302 of DC link 218 over time that varies based on whether PFC circuit 208 operates in the discontinuous mode or the continuous mode in an exemplary embodiment. The transition point between the discontinuous mode and the continuous mode is depicted as a vertical dashed line representing a time 304 when PFC circuit 208 transitions operation from the discontinuous mode to the continuous mode.

Similar to that described previously for PFC circuits, controller 212 may operate PFC circuit 208 the discontinuous mode when multi-phase motor 206 operates below the critical power, and PFC circuit 208 may operate in the continuous mode when multi-phase motor 206 operates above the critical power. In the discontinuous mode, voltage 302 of DC link 218 ramps up and down and is bound by an upper voltage threshold 306 and a lower voltage threshold 308. In particular, while PFC circuit 208 transfers power from AC source 204 to charge the capacitors of DC link 218, voltage 302 of DC link 218 increases until upper voltage threshold 306 is reached, and controller 212 turns off PFC circuit 208 or disables the PWM pulse pattern applied by PFC circuit 208 to the power switches used to perform the AC to DC conversion and charge DC link 218 (not shown). While PFC circuit 208 is off or the PWM pulse pattern is disabled, voltage 302 of DC link 218 decreases as multi-phase inverter 210 continues to operate multi-phase motor 206 and discharge the capacitors of DC link 218 until lower threshold 308 is reached. Once voltage 302 reaches lower voltage threshold 308, controller 212 turns on PFC circuit 208 or enables the PWM pulse pattern and the cycle repeats. Therefore, in the discontinuous mode, voltage 302 of DC link 218 may be bound by upper voltage threshold 306 and lower voltage threshold 308, which ensures that PFC circuit 208 does not charge DC link 218 to an unacceptably high voltage while multi-phase motor 206 is drawing less than the critical power.

At or above the critical power, PFC circuit 208 operates in the continuous mode, and PFC circuit 208 may regulate voltage 302 of DC link 218 at a pre-determined value by varying the duty cycle of the PWM pattern applied by PFC circuit 208 to the power switches used to perform the AC to DC conversion and charge DC link 218 (not shown). PFC circuit 208 may naturally transition out of the discontinuous mode as illustrated in FIG. 3, as voltage 302 of DC link 218 no longer continuously increases after a time 310 when controller 212 turns on PFC circuit 208 or enables the PWM pulse pattern until upper voltage threshold 306 is reached. Rather, as illustrated in FIG. 3 at time 310, voltage 302 increases slightly between time 310 and time 304 as a demonstration of a dynamic transient from the discontinuous mode to the continuous mode, and therefore, controller 212 no longer is required to cycle PFC circuit 208 on and off as previously described.

As discussed briefly above, the critical power of multi-phase motor 206 may be identified by injecting an increasing DC current into multi-phase motor 206 during a rotor alignment process of multi-phase motor 206 and determining the value of the DC current that causes PFC circuit 208 to transition out of the discontinuous mode and into the continuous mode.

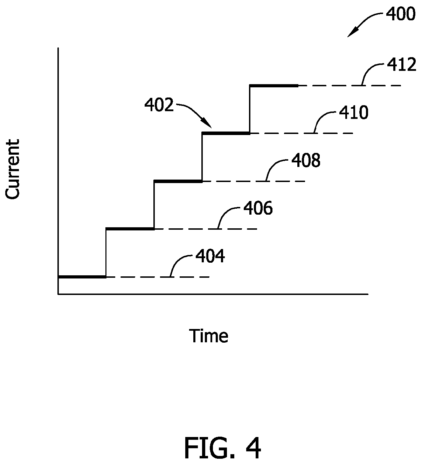

FIG. 4 illustrates a current graph 400 of a DC current 402 injected into multi-phase motor 206 during a rotor alignment process of multi-phase motor 206 in an exemplary embodiment. In this embodiment, the value of DC current 402 increases over time during the rotor alignment process, depicted as values 404, 406, 408, 410, 412. Although DC current 402 is illustrated as a step-wise increase in values 404, 406, 408, 410, 412 over time, DC current 402 may be a linear increase in current over time or some other type of increasing current waveform. Although PFC circuit 208 operates in the discontinuous mode initially, when the value of DC current 402 is low (e.g., value 404), eventually PFC circuit 208 transitions to the continuous mode, and the critical power can be identified based on the value of DC current 402 at the transition point, which will be described in more detail below.

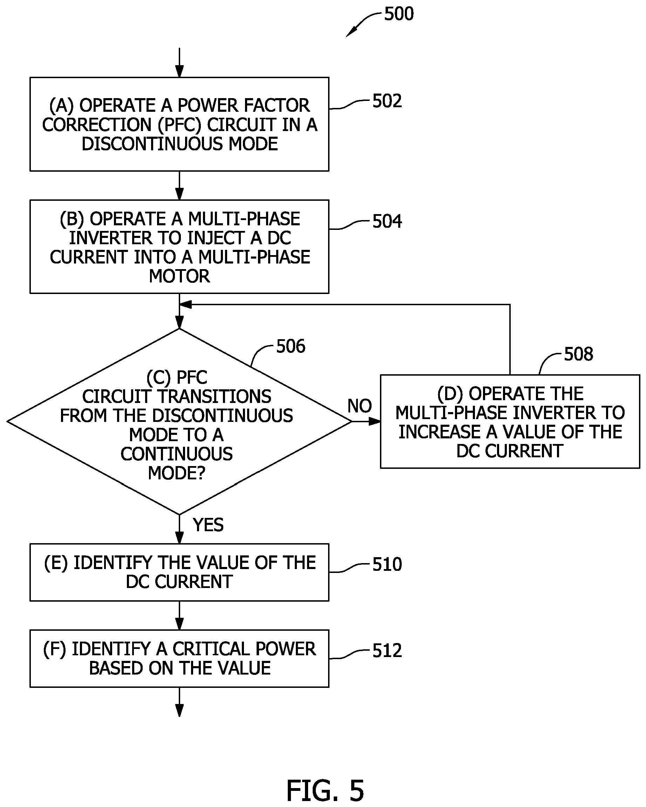

FIG. 5 depicts a method 500 operable by a controller of a motor drive for a multi-phase motor in an exemplary embodiment. Method 500 will be discussed with respect to motor drive 202 of FIG. 2, although method 500 may be performed by other systems, not shown.

In order to identify the critical power during a rotor alignment process, method 500 first comprises (a) operating 502 a PFC circuit in a discontinuous mode to maintain a voltage of a DC link between an upper voltage threshold and a lower voltage threshold. For example, initially, because very little power is drawn from DC link 218 while multi-phase motor 206 is not rotating, processor 214 of controller 212 operates PFC circuit 208 in the discontinuous mode using any of the techniques previously described, and maintains voltage 302 of DC link 218 between upper voltage threshold 306 and lower voltage threshold 308 as illustrated in FIG. 3.

Method 500 further comprises (b) operating 504 a multi-phase inverter to inject a DC current into the multi-phase motor to align the rotor. For example, processor 214 of controller 212 operates multi-phase inverter 210 to inject a DC current 402 into multi-phase motor 206 while multi-phase motor 206 is not rotating, where the DC current 402 initially has a value 404 as illustrated in FIG. 4.

Method 500 further comprises (c) determining 506 whether the PFC circuit transitions from the discontinuous mode to the continuous mode while injecting the DC current. For example, processor 214 of controller 212 determines whether PFC circuit 208 transitions from the discontinuous mode to the continuous mode. To do so, processor 214 of controller 212 may measure a DC ripple voltage of voltage 302 at DC link 218, determine whether the DC ripple voltage is less than a threshold ripple voltage, and determine that PFC circuit 208 has transitioned from the discontinuous mode to the continuous mode in response to determining that the DC ripple voltage is less than the threshold ripple voltage. For example and referring to FIG. 3, voltage 302 of DC link 218 has a higher ripple voltage in the discontinuous mode as compared to the continuous mode, which can be measured to determine if PFC circuit 208 has transitioned from the discontinuous mode to the continuous mode of operation.

If the PFC circuit has not transitioned from the discontinuous mode to the continuous mode, then method 500 further comprises (d) operating 508 the multi-phase inverter to increase a value of the DC current. For example, processor 214 of controller 212 operates multi-phase inverter 210 to increase a value of DC current 402, from value 404 to value 406 or one of the other values 408, 410, 412 (see FIG. 4).

If the PFC circuit has transitioned from the discontinuous mode to the continuous mode, then method 500 further comprises (e) identifying 510 the value of the DC current injected into the multi-phase motor. For example, processor 214 of controller 212 determines that PFC circuit 208 has transitioned from the discontinuous mode to the continuous mode, and identifies one of values 404, 406, 408, 410, 412 as illustrated in FIG. 4 where the transition has occurred, which may occur after multiple iterations of (d) and (e) above that checks for a transition and increases the current if the transition has not occurred. Identifying that PFC circuit 208 has transitioned from the discontinuous mode to the continuous mode may be performed using various techniques, including measuring the ripple voltage of voltage 302 of DC link 218 as previously described. Once PFC circuit 208 has transitioned, then value 404, 406, 408, 410, 412 of DC current 402 injected into multi-phase motor 206 may be maintained for a pre-determined amount of time to ensure that the rotor of multi-phase motor 206 is aligned.

Once the value of the current injected into the multi-phase motor is identified, then method 500 further comprises (f) identifying 512 a critical power for the multi-phase motor based on the value of the DC current. For example, processor 214 of controller 212 identifies the critical power based on which of values 404, 406, 408, 410, 412 of DC current 402 applied to a multi-phase motor 206 causes PFC circuit 208 to transition from the discontinuous mode to the continuous mode. This critical power is be used during operation of multi-phase motor 206 to modify the parameters of PFC circuit 208 as previously described.

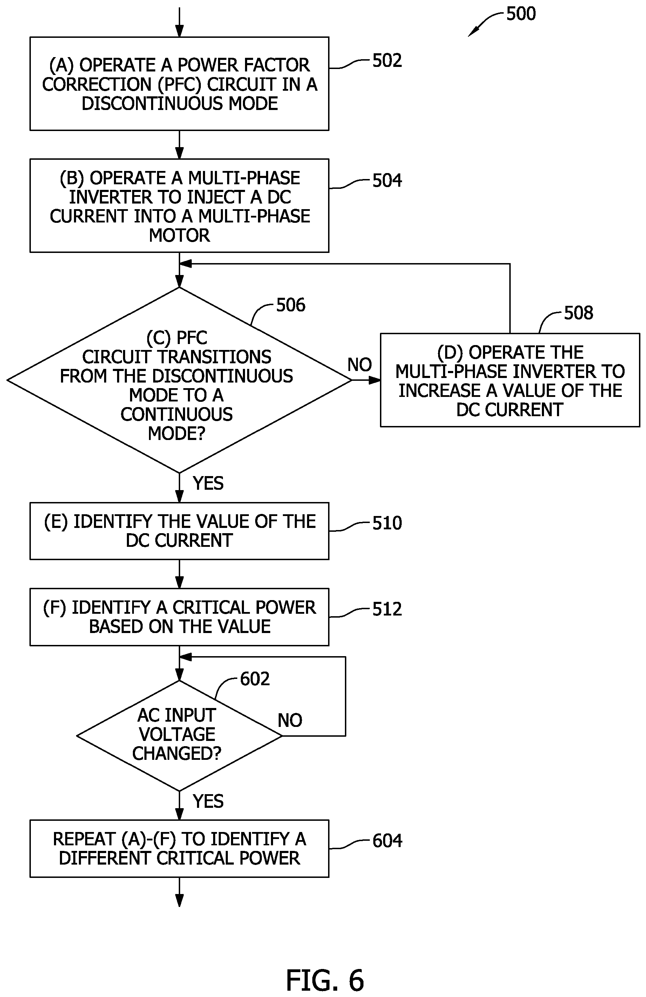

FIGS. 6-8 illustrate optional embodiments of method 500 of FIG. 5 in exemplary embodiments.

In some cases, the AC voltage of AC source 204 may change, which changes the critical power where PFC circuit 208 transitions between the discontinuous mode and the continuous mode. When the AC input voltage changes, then critical power may be re-calculated.

In an option embodiment, method 500 further comprises determining 602 whether the AC input voltage has changed (see FIG. 6). If the AC input voltage has changed, then method 500 further comprises repeating 604 (a)-(f) (see FIG. 5) to identify a different critical power for the multi-phase motor. For example, processor 214 of controller 212 determines whether the AC input voltage has changed, and repeats (a)-(f) as previously described to re-calculate the critical power. In the example, the new critical power may be different than the critical power initially calculated, because the AC input voltage has changed. This new critical power may then be used to modify the operation of PFC circuit 208 during operation of multi-phase motor 206.

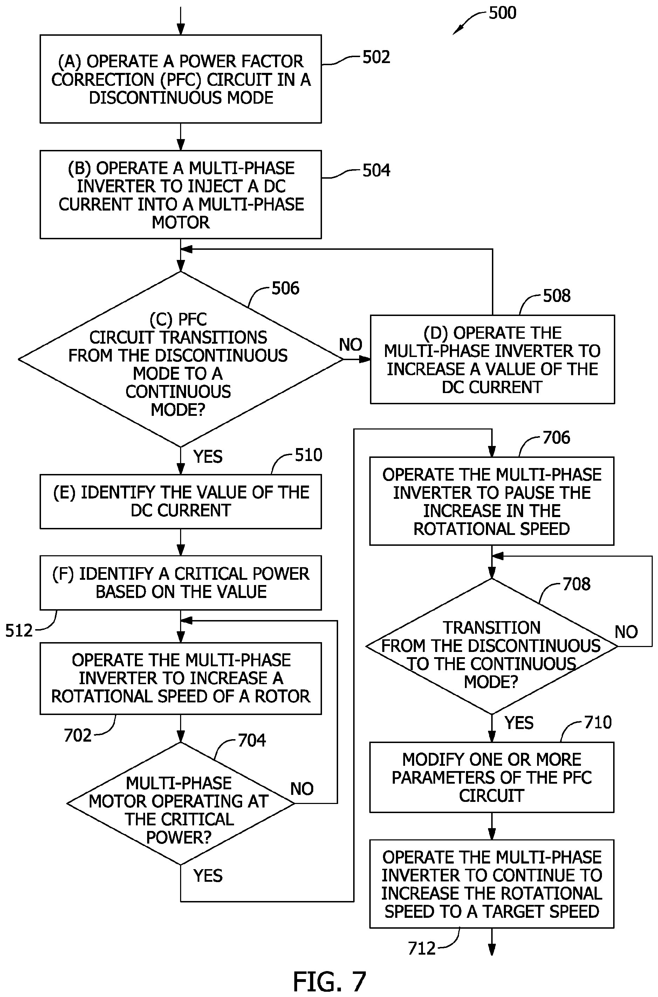

Although motor drive 202 may operate multi-phase motor 206 in any number of different ways, one case will be described with respect to FIG. 7. FIG. 7 illustrates a situation where a motor drive gradually increases the speed of a multi-phase motor, and the speed increase is paused at the critical power and a check is made to determine if the PFC circuit has transitioned from the discontinuous mode to the continuous mode. If the PFC circuit has transitioned, then the parameters of the PFC circuit are modified. Once the parameters are modified, the increase in speed of the multi-phase motor is resumed until the multi-phase motor reaches a target speed.

In the optional embodiment depicted in FIG. 7, method 500 further comprises operating 702 the multi-phase inverter to increase a rotational speed of the rotor of the multi-phase motor, and determining 704 whether the multi-phase motor is operating at the critical power. For example, processor 214 of controller 212 operates multi-phase inverter 210 to gradually increase the speed of the rotor of multi-phase motor 206, and determines if multi-phase motor 206 is operating at the critical power, by, for example, using current and voltage information provided to processor 214 of controller 212 by multi-phase inverter 210.

If the multi-phase motor is operating at the critical power, then method 500 further comprises operating 706 the multi-phase inverter to pause the increase in the rotational speed of the rotor, and determining 708 whether the PFC circuit has transitioned from the discontinuous mode to the continuous mode. For example, processor 214 of controller 212 operates multi-phase inverter 210 to pause the increase in the rotational speed of the rotor of multi-phase motor 206, and determines whether PFC circuit 208 has transitioned from the discontinuous mode to the continuous mode.

If the PFC circuit has transitioned, then method 500 further comprises modifying 710 one or more parameters of the PFC circuit, and operating 712 the multi-phase inverter to continue to increase the rotational speed of the rotor to a target speed. For example, processor 214 of controller 212 modifies the parameters of PFC circuit 208 and operates multi-phase inverter 210 to continue to increase the speed of multi-phase motor 206 to the target speed. Modifying the parameters of PFC circuit 208 may include, as previously described, increasing the inductor current control loop saturation value of PFC circuit 208, removing upper voltage threshold 306 and/or lower voltage threshold 308 as a voltage control strategy for DC link 218, etc.

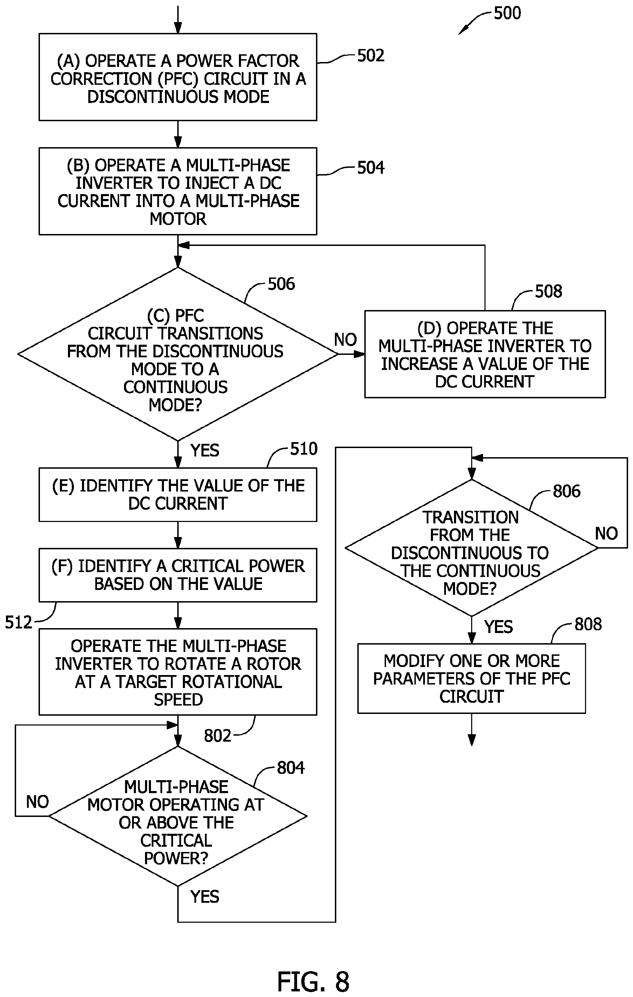

Although a motor drive may operate a multi-phase motor in any number of different ways as described above, another case will be described with respect to FIG. 8. FIG. 8 illustrates a situation where a motor drive performs a step-wise increase in a power of a multi-phase motor, and determines if the multi-phase motor is operating at or above the critical power after the step-wise increase in power. If the multi-phase motor is operating at or above the critical power, then a check is made to determine if the PFC circuit has transitioned from the discontinuous mode to the continuous mode. If the PFC circuit has transitioned, then the parameters of the PFC circuit are modified.

In the optional embodiment depicted in FIG. 8, method 500 further comprises operating 802 the multi-phase inverter to rotate a rotor of a multi-phase motor at a target rotational speed, and determining 804 whether the multi-phase motor is operating at or above the critical power. If the multi-phase motor is operating at or above the critical power, then method 500 further comprises determining 806 whether the PFC circuit has transitioned from the discontinuous mode to the continuous mode. If the PFC circuit has transitioned, then method 500 further comprises modifying 808 one or more parameters of the PFC circuit. For example, processor 214 of controller 212 operates multi-phase inverter 210 to rotate the rotor of multi-phase motor 206 at a target rotational speed, and determines whether multi-phase motor 206 is operating at or above the critical power. If multi-phase motor 206 is operating at or above the critical power, then processor 214 of controller 212 determines whether PFC circuit 208 has transitioned from the discontinuous mode to the continuous mode. If PFC circuit 208 has transitioned, then processor 214 of controller 212 modifies one or more parameters of PFC circuit 208 as previously described.

An example technical effect of the apparatus and method described herein includes, at least, improving the performance of diode rectifiers that are provided both AC and DC input power and in particular, to providing high efficiency operation for high voltage AC input and low voltage DC input scenarios.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

This written description uses examples to disclose the embodiments, including the best mode, and also to enable any person skilled in the art to practice the embodiments, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A motor drive for a multi-phase motor, the motor drive comprising:
a controller configured to:
(a) operate a power factor correction (PFC) circuit configured to couple to an alternating current (AC) line input in a discontinuous mode to maintain a voltage of a direct current (DC) link between an upper voltage threshold and a lower voltage threshold;
(b) operate a multi-phase inverter coupled to the DC link, while a rotor of the multi-phase motor is nonrotating, to inject a DC current into the multi-phase motor to align the rotor;
(c) determine whether the PFC circuit transitions from the discontinuous mode to a continuous mode while injecting the DC current;
(d) operate the multi-phase inverter to increase the DC current in response to determining that the PFC circuit has not transitioned from the discontinuous mode to the continuous mode;
(e) identify a value of the DC current in response to determining that the PFC circuit has transitioned from the discontinuous mode to the continuous mode; and
(f) identify a critical power for the multi-phase motor based on the value, wherein the critical power defines a power of the multi-phase motor where the PFC circuit transitions from the discontinuous mode to the continuous mode while the rotor is rotating.

2. The motor drive of claim 1, wherein the controller is further configured to:
determine whether a voltage of the AC line input has changed; and
in response to determining that the voltage of the AC line input has changed, repeat (a)-(f) to identify a different critical power for the multi-phase motor based on a different value of the DC current injected into the multi-phase motor, wherein the different critical power defines a different power of the multi-phase motor where the PFC circuit transitions from the discontinuous mode to the continuous mode while the rotor is rotating.

3. The motor drive of any one of claims 1 or 2, wherein the controller is further configured to:
operate the multi-phase inverter to increase a rotational speed of the rotor;
determine whether the multi-phase motor is operating at the critical power;
operate the multi-phase inverter to pause the increase in the rotational speed of the rotor in response to determining that the multi-phase motor is operating at the critical power;
determine whether the PFC circuit has transitioned from the discontinuous mode to the continuous mode while the increase in the rotational speed is paused;
modify one or more parameters of the PFC circuit in response to determining that the PFC circuit has transitioned from the discontinuous mode to the continuous mode; and
operate the multi-phase inverter to continue to increase the rotational speed of the rotor to a target rotational speed in response to modifying the one or more parameters of the PFC circuit, particularly wherein the controller, to modify the one or more parameters of the PFC circuit, is further configured to:
increase an inductor current control loop saturation value of the PFC circuit; and/or
remove the upper voltage threshold and the lower voltage threshold as a voltage control strategy for the DC link.

4. The motor drive of any one of claims 1 through 3, wherein the controller is further configured to:
operate the multi-phase inverter to rotate the rotor at target rotational speed;
determine whether the multi-phase motor is operating at or above the critical power;
determine whether the PFC circuit has transitioned from the discontinuous mode to the continuous mode in response to determining that the multi-phase motor is operating at or above the critical power; and
modify one or more parameters of the PFC circuit in response to determining that the PFC circuit has transitioned from the discontinuous mode to the continuous mode, particularly wherein the controller, to modify the one or more parameters of the PFC circuit, is further configured to:
increase an inductor current control loop saturation value of the PFC circuit; and/or
remove the upper voltage threshold and/or the lower voltage threshold as a voltage control strategy for the DC link.

5. The motor drive of any one of claims 1 through 4, wherein the controller, to determine whether the PFC transitions from the discontinuous mode to the continuous mode, is further configured to:
measure a DC ripple voltage on the DC link;
determine whether the DC ripple voltage is less than a threshold ripple voltage; and
identify that the PFC has transitioned from the discontinuous mode to the continuous mode in response to determining that the DC ripple voltage is less than the threshold ripple voltage.

6. A method operable by a controller of a motor drive for a multi-phase motor, the method comprising:
(a) operating a power factor correction (PFC) circuit configured to couple to an alternating current (AC) line input in a discontinuous mode to maintain a voltage of a direct current (DC) link between an upper voltage threshold and a lower voltage threshold;
(b) operating a multi-phase inverter coupled to the DC link, while a rotor of the multi-phase motor is nonrotating, to inject a DC current into the multi-phase motor to align the rotor;
(c) determining whether the PFC circuit transitions from the discontinuous mode to a continuous mode while injecting the DC current;
(d) operating the multi-phase inverter to increase a value of the DC current in response to determining that the PFC circuit has not transitioned from the discontinuous mode to the continuous mode;
(e) identifying the value of the DC current in response to determining that the PFC circuit has transitioned from the discontinuous mode to the continuous mode; and
(f) identifying a critical power for the multi-phase motor based on the value, wherein the critical power defines a power of the multi-phase motor where the PFC circuit transitions from the discontinuous mode to the continuous mode while the rotor is rotating.

7. The method of claim 6, further comprising:
determining whether a voltage of the AC line input has changed; and
in response to determining that the voltage of the AC line input has changed, repeating (a)-(f) to identify a different critical power for the multi-phase motor based on a different value of the DC current injected into the multi-phase motor, wherein the different critical power defines a different power of the multi-phase motor where the PFC circuit transitions from the discontinuous mode to the continuous mode while the rotor is rotating.

8. The method of any one of claims 6 or 7, further comprising:
operating the multi-phase inverter to increase a rotational speed of the rotor;
determining whether the multi-phase motor is operating at the critical power;
operating the multi-phase inverter to pause the increase in the rotational speed of the rotor in response to determining that the multi-phase motor is operating at the critical power;
determining whether the PFC circuit has transitioned from the discontinuous mode to the continuous mode while the increase in the rotational speed is paused;
modifying one or more parameters of the PFC circuit in response to determining that the PFC circuit has transitioned from the discontinuous mode to the continuous mode; and
operating the multi-phase inverter to continue to increase the rotational speed of the rotor to a target rotational speed in response to modifying the one or more parameters of the PFC circuit, particularly wherein modifying the one or more parameters of the PFC circuit further comprises:
increasing an inductor current control loop saturation value of the PFC circuit; and/or
removing the upper voltage threshold and/or the lower voltage threshold as a voltage control strategy for the DC link.

9. The method of any one of claims 6 through 8, further comprising:
operating the multi-phase inverter to rotate the rotor at a target rotational speed;
determining whether the multi-phase motor is operating at or above the critical power;
determining whether the PFC circuit has transitioned from the discontinuous mode to the continuous mode in response to determining that the multi-phase motor is operating at or above the critical power; and
modifying one or more parameters of the PFC circuit in response to determining that the PFC circuit has transitioned from the discontinuous mode to the continuous mode, particularly wherein modifying the one or more parameters of the PFC circuit further comprises:
increasing an inductor current control loop saturation value of the PFC circuit; and/or
removing the upper voltage threshold and/or the lower voltage threshold as a voltage control strategy for the DC link.

10. The method of any one of claims 6 through 9, wherein determining whether the PFC transitions from the discontinuous mode to the continuous mode further comprises:
measuring a DC ripple voltage on the DC link;
determining whether the DC ripple voltage is less than a threshold ripple voltage; and
identifying that the PFC has transitioned from the discontinuous mode to the continuous mode in response to determining that the DC ripple voltage is less than the threshold ripple voltage.

11. A motor drive for a multi-phase motor, the motor drive comprising:
a power factor correction (PFC) circuit coupled between an alternating current (AC) line input and a direct current (DC) link, wherein the PFC circuit is configured to operate in a discontinuous mode and a continuous mode;
a multi-phase inverter coupled to the DC link and the multi-phase motor; and
a controller configured to:
(a) operate the PFC circuit in the discontinuous mode to regulate a voltage of the DC link while a rotor of the multi-phase motor is nonrotating;
(b) operate the multi-phase inverter to incrementally increase a value of a DC current injected into the multi-phase motor while the rotor of the multi-phase motor is nonrotating;
(c) determine whether the PFC circuit transitions from the discontinuous mode to the continuous mode while incrementally increasing the value of the DC current;
(d) identify a critical power for the multi-phase motor based on the value of the DC current when the PFC circuit transitions from the discontinuous mode to the continuous mode; and
(e) modify one or more parameters of the PFC circuit based on the critical power when the rotor is rotating.

12. The motor drive of claim 11, wherein the controller is further configured to:
determine whether a voltage of the AC line input has changed; and
in response to determining that the voltage of the AC line input has changed, repeat (a)-(d) to identify a different critical power for the multi-phase motor based on a different value of the DC current when the PFC circuit transitions from the discontinuous mode to the continuous mode.

13. The motor drive of any one of claims 11 or 12, wherein the controller, to modify the one or more parameters of the PFC circuit, is further configured to:
increase an inductor current control loop saturation value of the PFC circuit.

14. The motor drive of any one of claims 11 through 13, wherein the controller, to operate the PFC circuit in the discontinuous mode to regulate the voltage of the DC link, is further configured to:
enable and disable the PFC circuit to implement a voltage control strategy and maintain the voltage of the DC link between an upper voltage threshold and a lower voltage threshold, particularly wherein the controller, to modify the one or more parameters of the PFC circuit, is further configured to:
remove the upper voltage threshold and/or the lower voltage threshold as the voltage control strategy for the DC link.

15. The motor drive of any one of claims 11 through 14, wherein the controller, to determine whether the PFC transitions from the discontinuous mode to the continuous mode, is further configured to:
measure a DC ripple voltage on the DC link;
determine whether the DC ripple voltage is less than a threshold ripple voltage; and
identify that the PFC has transitioned from the discontinuous mode to the continuous mode in response to determining that the DC ripple voltage is less than the threshold ripple voltage.
